# EUROPÄISCHE PATENTSCHRIFT

(11) **EP 1 965 998 B1**
(45) Veröffentlichungstag und Bekanntmachung des Hinweises auf die Patenterteilung: **29.01.2014**
(21) Anmeldenummer: 06830234.8
(22) Anmeldetag: 30.11.2006
(51) Int. Cl.: B60K 6/445

(54) **VERFAHREN ZUM BETREIBEN EINES HYBRIDFAHRZEUGS**
METHOD FOR OPERATING A HYBRID VEHICLE
PROCEDE PERMETTANT DE FAIRE FONCTIONNER UN VEHICULE HYBRIDE

(30) Priorität: 22.12.2005 DE 102005061414
(43) Veröffentlichungstag der Anmeldung: 10.09.2008
(73) Patentinhaber: ROBERT BOSCH GMBH, 70442 Stuttgart (DE)
(72) Erfinder: FALKENSTEIN, Jens-Werner, 73434 Aalen (DE)
(86) Internationale Anmeldenummer: PCT/EP2006/069130
(87) Internationale Veröffentlichungsnummer: WO 2007/074019

(56) Entgegenhaltungen:
- EP-A1- 1 548 253
- EP-A2- 1 149 725
- WO-A-2005/009770
- FR-A1- 2 783 763
- US-A1- 2004 122 563

## Beschreibung

### Stand der Technik

Die Erfindung geht aus von einem Verfahren zum Betreiben eines Hybridfahrzeugs nach dem Oberbegriff des Anspruchs 1.

Elektromagnetisch-leistungsverzweigende Hybridantriebe mit wenigstens zwei Aggregaten, einem Verbrennungsmotor und einer Elektromaschine, sind bekannt und erlauben, den Verbrennungsmotor im Bereich hoher Wirkungsgrade zu betreiben.

Die Antriebsleistung des Verbrennungsmotors wird mittels einem oder mehreren mechanischen Überlagerungsgetrieben (Planetengetrieben) in eine Teilleistung aufgeteilt, die rein mechanisch und damit mit hohem Wirkungsgrad zum Abtrieb gelangt. Die restliche Leistung wird über eine generatorisch arbeitende Elektromaschine in elektrische Leistung gewandelt und meist von einer zweiten, motorischen Elektromaschine wieder in das Getriebe gespeist.

Durch die Überlagerungseigenschaften der Planetengetriebe ist, unter Vernachlässigung von Elastizitäten, typischerweise ein Drehzahlfreiheitsgrad vorhanden. So lässt sich bei vorgegebener Fahrzeuggeschwindigkeit und bei vorgegebener Fahrstufe, falls mehrere Fahrstufen gewählt werden können, die Drehzahl des Verbrennungsmotors innerhalb physikalischer Grenzen frei wählen. Es sind Getriebestrukturen bekannt, bei denen die Drehzahl der zweiten Elektromaschine direkt von der Fahrzeuggeschwindigkeit abhängt. Bei anderen Konzepten ist dies zumindest in einer von mehreren Fahrstufen der Fall. Bei Änderungen am Drehzahlfreiheitsgrad, d.h. an der Verbrennungsmotordrehzahl, ergibt sich eine Drehzahländerung an der ersten Elektromaschine, die Drehzahl der zweiten Elektromaschine bleibt mit der Fahrzeuggeschwindigkeit konstant.

Im hybridischen Betrieb wird der vorhandene Drehzahlfreiheitsgrad dazu benutzt, den Antriebsstrang im Bereich hoher Gesamtwirkungsgrade zu betreiben. Eine Steuerung berücksichtigt im Wesentlichen die Fahrzeuggeschwindigkeit bzw. die Istdrehzahl der Getriebeabtriebswelle, die vom Fahrer angeforderte Zugkraft sowie die für die Versorgung des Bordnetzes erforderliche Leistung und legt basierend darauf den vorhandenen Drehzahlfreiheitsgrad sowie die Drehmomente der Aggregate fest.

Bei den bekannten Ansätzen zur Regelung eines solchen Antriebsstrangs mit einem Drehzahlfreiheitsgrad wird nur ein Aggregat, meist eine der beiden Elektromaschinen, drehzahlgeregelt betrieben, d.h. ein Vergleich der Solldrehzahl mit der Istdrehzahl erfolgt nur für ein Aggregat.

Die beiden anderen Aggregate, die zweite Elektromaschine und der Verbrennungsmotor, sind drehmomentgesteuert, teilweise in Abhängigkeit von der Drehzahlabweichung am drehzahlgeregelten Aggregat.

In der US 2002/0113440 A1 und in der US 2003/0060948A1 wird jeweils eine der beiden Elektromaschinen drehzahlgeregelt. Es wird eine Solldrehzahl des Verbrennungsmotors berechnet, die zusammen mit der Fahrzeuggeschwindigkeit zur Ermittlung der Solldrehzahl für eine der beiden Elektromaschinen benutzt wird, die dann durch Vergleich ihrer Solldrehzahl mit ihrer Istdrehzahl drehzahlgeregelt wird.

Die US 2002/0024306 A1 schlägt vor, im leistungsverzweigenden Betrieb nur die Drehzahl des Verbrennungsmotors zu regeln. Es wird die Solldrehzahl des Verbrennungsmotors mit seiner Istdrehzahl verglichen, basierend darauf erfolgt ein Eingriff in Drehmomente.

Die FR 2 783 763 beschreibt eine Antriebseinrichtung für ein Kraftfahrzeug. Aus der WO 2005/009770 A1 ist zudem eine Regelstrategie für elektromechanisch leistungsverzweigende Hybridantriebe und aus der EP 1 149 725 A2 eine Steuereinrichtung für ein Hybridfahr-zeug und ein entsprechendes Verfahren nach dem Oberbegriff des Anspruchs 1, bekannt.

### Vorteile der Erfindung

Es kann vermieden werden, dass Ungenauigkeiten in den Drehmomentsteuerungen, die besonders bei einem Verbrennungsmotor vorhanden sind, sowie Ungenauigkeiten in den Reibverhältnissen des Getriebes sich auf eine drehzahlgeregelte, erste Elektromaschine auswirken. Eine Abweichung des vom Drehzahlregler an der Elektromaschine eingestellten Drehmoments vom in der Steuerung vorausberechneten Solldrehmoment kann vermieden werden.

Die Erfindung lässt sich bei einer Getriebestruktur bzw. in einer Fahrstufe, bei der die Drehzahl einer zweiten Elektromaschine direkt mit der Fahrzeuggeschwindigkeit gekoppelt ist, besonders vorteilhaft anwenden. Die Verbrennungsmotordrehzahl und die Drehzahl der ersten Elektromaschine hängen dann von dem Drehzahlfreiheitsgrad und der Fahrzeuggeschwindigkeit ab. Diese beiden, mit dem Drehzahlfreiheitsgrad verknüpften Aggregate, insbesondere die erste Elektromaschine und der Verbrennungsmotor, werden drehzahlgeregelt betrieben. Als Drehzahlfreiheitsgrad kann z.B. die Drehzahl des Verbrennungsmotors aufgefasst werden. Wird diese von der Steuerung festgelegt, lässt sich anhand der Koppelbedingungen des Getriebes aus der Fahrzeuggeschwindigkeit die Drehzahl der ersten Elektromaschine berechnen.

Das erfindungsgemäße Verfahren berücksichtigt Ungenauigkeiten in den Reibverhältnissen des Getriebes und Ungenauigkeiten in der Momentensteuerung des Verbrennungsmotors und minimiert deren Auswirkungen auf die in das Bordnetz eingespeiste elektrische Leistung. Daneben besteht weitaus weniger Gefahr, durch Stellgrößenbegrenzungen die Kontrolle über das System zu verlieren. Weitere Vorteile bestehen in einer aktiven Dämpfung unerwünschter Antriebstrangdrehschwingungen. Das erfindungsgemäße Verfahren lässt sich vorteilhaft in eine übliche Steuergerätestruktur einbinden, bei dem jedem der drei Aggregate ein Steuergerät zugeordnet ist, z.B. ein Motorsteuergerät für den Verbrennungsmotor und ein Wechselrichter mit Controller für jede Elektromaschine, und bei der die Steuergeräte über eine Busverbindung miteinander kommunizieren.

Erfindungsgemäß wird basierend auf einer Regelabweichung zwischen einer Solldrehzahl und einer Istdrehzahl des Verbrennungsmotors in das Drehmoment des Verbrennungsmotors eingegriffen. Genauer gesagt werden aus den Solldrehzahlen sowie Istdrehzahlen des Verbrennungsmotors und der ersten Elektromaschine die Solldrehmomente ermittelt. Dazu wird ein Mehrgrößenregler eingesetzt, dem die Solldrehzahlen und Istdrehzahlen zugeführt werden.

In einem günstigen Verfahrensschritt wird die Drehzahl des Verbrennungsmotors festgelegt und daraus eine Solldrehzahl der ersten Elektromaschine berechnet.

In einem weiteren günstigen Verfahrensschritt werden Solldrehmomente des Verbrennungsmotors und der Elektromaschinen vorgegeben.

In einem weiteren günstigen Verfahrensschritt werden die Solldrehmomente des Verbrennungsmotors und der ersten Elektromaschine zur Vorsteuerung der Drehzahlregelung des Verbrennungsmotors und der ersten Elektromaschine verwendet.

In einem günstigen Verfahrensschritt liegen die Solldrehmomente innerhalb von Maximalmomentengrenzen des Verbrennungsmotors bzw. der ersten Elektromaschine. Dadurch können Stellreserven für die Drehzahlregler zur Verfügung gestellt werden.

In einem günstigen Verfahrensschritt vergleicht jeder Drehzahlregler die jeweilige Solldrehzahl mit der jeweiligen Istdrehzahl und berechnet daraus ein zusätzliches Drehmoment für den Verbrennungsmotor bzw. die erste Elektromaschine auf Basis der jeweiligen Regelabweichung.

In einem weiteren günstigen Verfahrensschritt wird zur Drehzahlregelung des Verbrennungsmotors ein Integralanteil eines Reglers herangezogen. Der Integralanteil kann Ungenauigkeiten in der Drehmomentansteuerung des Verbrennungsmotors ausgleichen.

In einem weiteren günstigen Verfahrensschritt wird zur Drehzahlregelung der ersten Elektromaschine ein Proportionalanteil eines Reglers herangezogen. Dadurch ist eine kleine Zeitkonstante erreichbar. Darüber hinaus können die Proportionalanteile des oder der Regler Drehschwingungen der Aggregate aktiv entgegenwirken. Damit kann besonders vorteilhaft eine Dämpfung bei höheren Frequenzen erfolgen.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus einem nachfolgend anhand von Zeichnungen dargestellten Ausführungsbeispiel der Erfindung.

Im Folgenden zeigen:
- Fig. 1: eine bekannte Regelstrategie einer leistungsverzweigen-den Hybridantriebsteuerung; und
- Fig. 2: ein bevorzugtes Ausführungsbeispiel einer erfindungsgemäßen Regelstrategie einer bevorzugten leistungsverzweigenden Hybridsteuerung.

### Beschreibung des Ausführungsbeispiels

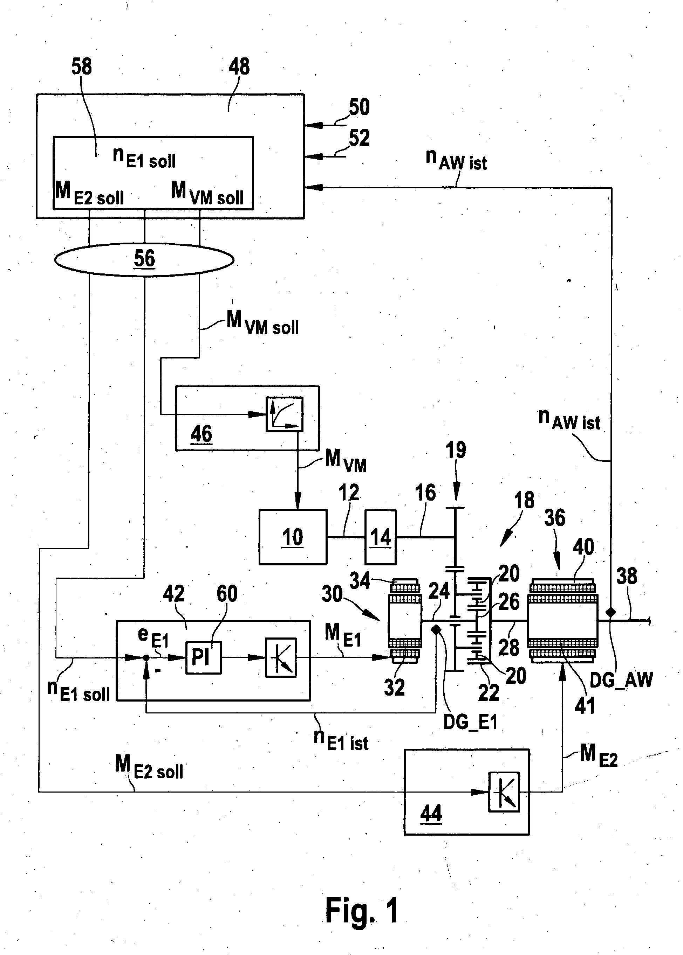

Fig. 1 zeigt zum besseren Verständnis der Erfindung eine konventionelle Regelstrategie am Beispiel eines Getriebes 18 mit einem Planetensatz 20. Als Aggregate sind ein Verbrennungsmotor 10 und zwei Elektromaschinen 30, 36 vorgesehen. Das Getriebe 18 ist zwischen den beiden Elektromaschinen 30, 36 angeordnet. Die Planeten 20 wälzen auf einem Sonnenrad 26 ab und sind innerhalb eines Hohlrads 22 angeordnet. Die ersten Elektromaschine 30 liegt mit ihrer mit ihrem Rotor 32 verbundenen Abtriebswelle 24 an dem Sonnenrad 26. Eine Welle 28 liegt am Hohlrad 22 und treibt den Rotor 41 der zweiten Elektromaschine 36 an, deren Ausgang die Abtriebswelle 38 bildet. Beide Elektromaschinen 30, 36 sind als Innenläufer ausgebildet, deren Rotoren 32, 41 innerhalb ihrer Statoren 34, 40 drehen.

Dem Verbrennungsmotor 10 ist ein Motorsteuergerät 46, den Elektromaschinen 30, 36 je ein Wechselrichter 42, 44 zugeordnet. Ein Drehzahlgeber DG_E1 erfasst die aktuelle Drehzahl der ersten Elektromaschine 30 und ein Drehzahlgeber DG_AW die der zweiten Elektromaschine 36. Eine Steuerung 48 gibt in einem Sollwertblock 58 die Solldrehzahl nE1soll der drehzahlgeregelten Elektromaschine 30, das Solldrehmoment ME2soll der drehmomentgesteuerten zweiten Elektromaschine 36 und das Sollmoment MVMsoll des drehmomentgesteuerten Verbrennungsmotors 10 vor. Die Steuerung erhält als Eingangsgrößen 50, 52, nAWist z.B. eine Fahrpedalstellung sowie eine erforderliche elektrische Leistung für ein Bordnetz sowie die Istdrehzahl nAWist einer Abtriebswelle 38 der zweiten Elektromaschine 36. Das Drehmoment MVM beeinflusst das Drehmoment ME1, das der Drehzahlregler 60 des ersten Wechselrichters 42 an der ersten Elektromaschine 30 einstellt, bzw. als Sollwert für eine unterlagerte Stromregelung vorgibt. Im Idealfall entspricht das Drehmoment ME1 einem in der Steuerung 48 vorausberechneten Solldrehmoment ME1soll für die drehzahlgeregelte Elektromaschine 30. Ungenauigkeiten in den Drehmomentsteuerungen, die besonders beim Verbrennungsmotor 10 vorhanden sind, sowie Ungenauigkeiten in den Reibverhältnissen des Getriebes 18 wirken sich auf die drehzahlgeregelte Elektromaschine 30 aus. Das vom Drehzahlregler 60 an der ersten Elektromaschine 30 eingestellte Drehmoment ME1 kann dadurch erheblich vom in der Steuerung 48 vorausberechneten Solldrehmoment ME1soll abweichen. Dies hat zwei negative Effekte. Zum einen weicht die elektrische Leistung der drehzahlgeregelten ersten Elektromaschine 30 vom Sollwert ab. Die in das Bordnetz eingespeiste elektrische Leistung entspricht dann nicht der Vorgabe der Steuerung 48, was sich negativ auf das elektrische Bordnetz auswirkt. Daneben können die Leistungsgrenzen eines nicht dargestellten elektrischen Energiespeichers verletzt werden, z.B. bei der Energierückgewinnung während eines Bremsvorgangs oder beim Boostbetrieb. Zum anderen kann die drehzahlgeregelte erste Elektromaschine 30 durch entsprechende Ungenauigkeiten an ihre Maximalmomentengrenze gelangen, was eine Stellgrößenbegrenzung für den Drehzahlregelkreis bedeutet. Die mit der Drehzahlregelung eingebrachte Bindung wird dabei unwirksam. Ohne weitere Eingriffe in den drehmomentgesteuerten Verbrennungsmotor 10 geht die Kontrolle über das System verloren.

Im dynamischen Betrieb können die momentengesteuerten Aggregate, d.h. der Verbrennungsmotor 10 und die zweite Elektromaschine 36, basierend auf der Kenntnis der zu kompensierenden Trägheiten vorgesteuert werden. Allerdings ist dabei mit zusätzlichen Ungenauigkeiten zu rechnen, die sich auf das Drehmoment ME1 der drehzahlgeregelten Elektromaschine 30 auswirken. Ein Bussystem 56 überträgt die verschiedenen Sollwerte MVMsoll, ME2soll und nE1soll für Drehmoment und Drehzahl an das Motorsteuergerät 46 bzw. die Wechselrichter 42, 44.

Ein Zweimassenschwungrad 14 bzw. ein Torsionsdämpfer an der Kurbelwelle 12 des Verbrennungsmotors 10 ist meist erforderlich, um das Getriebe 18 von Drehungleichförmigkeiten des Verbrennungsmotors 10 abzukoppeln. Das Zweimassenschwungrad 14 treibt mit seiner Ausgangswelle 16 einen Steg 19 des Planetensatzes 20 des Getriebes 18 an. Infolge der Elastizität können allerdings unerwünschte Drehschwingungen im Antriebsstrang entstehen. Eine aktive Schwingungsdämpfung ist mit nur einem Drehzahlregler 60 des ersten Wechselrichters 42 der ersten Elektromaschine 30 nur sehr begrenzt möglich.

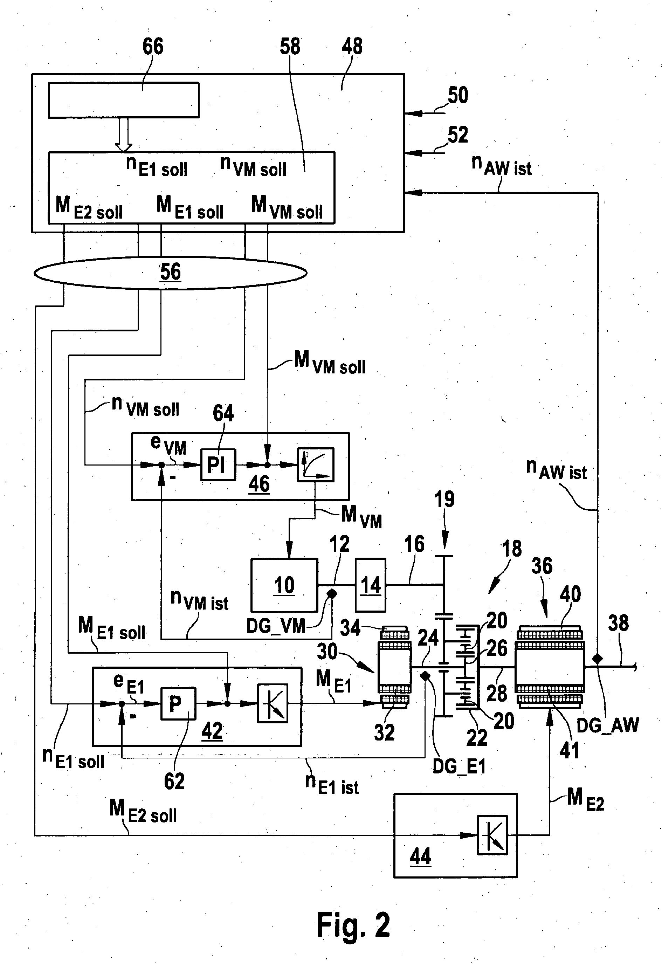

Fig. 2 zeigt ein Ausführungsbeispiel für die erfindungsgemäße Regelung mit zwei getrennten Drehzahlreglern 62, 64 an einem Getriebe 18 mit einem Planetensatz 20. Die Anordnung der Komponenten entspricht weitgehend derjenigen in Fig. 1, auf die zu deren Beschreibung verwiesen wird. Der Verbrennungsmotor 10 treibt über das Zweimassenschwungrad 14 den Steg 19 des Planetensatzes 20 des Getriebes 18 an. Die Elektromaschine 30 ist mit dem Sonnenrad 26 des Planetensatzes 20 gekoppelt, die Elektromaschine 36 mit dem Hohlrad 22. Der Ausgang der Elektromaschine 36 bildet die Getriebeabtriebswelle 38, die mit den nicht dargestellten Antriebsrädern des Hybridfahrzeugs verbunden ist. Ein Drehzahlgeber DG_E1 erfasst die aktuelle Drehzahl nE1ist der ersten, drehzahlgeregelten Elektromaschine 30, ein Drehzahlgeber DG_AW die gemeinsame Drehzahl nAWist von Getriebeabtriebswelle 38 und der zweiten, drehmomentgesteuerten Elektromaschine 36 und ein Drehzahlgeber DG_VM die aktuelle Drehzahl nVMist des Verbrennungsmotors 10.

Eine hier nicht weiter beschriebene Steuerung 48 erhält als Eingangsgrößen 50, 52, nAWist, z.B. die Fahrpedalstellung, die für das Bordnetz erforderliche elektrische Leistung 52 und die Istdrehzahl nAWist der Getriebeabtriebswelle 38, die mit der Istdrehzahl der zweiten Elektromaschine 36 übereinstimmt bzw. die daraus ermittelte Fahrzeuggeschwindigkeit.

Die Steuerung 48 legt im Sollwertblock 58 den Drehzahlfreiheitsgrad, d.h. die Verbrennungsmotordrehzahl nVMsoll optimiert fest und berechnet daraus, basierend auf der Kopplungsbedingung (Block 66) des Getriebes 18 und der Istdrehzahl nAWist der Getriebeabtriebswelle 38, die Solldrehzahl nE1soll für die erste Elektromaschine 30. Daneben gibt die Steuerung 48 die Sollmomente MVMsoll, ME1soll, ME2soll für die drei Aggregate Verbrennungsmotor 10, erste Elektromaschine 30 und zweite Elektromaschine 36 vor. Dabei wird ebenfalls die Kopplungsbedingung 66 des Getriebes 18 berücksichtigt. Die Solldrehmomente MVMsoll, ME1soll, ME2soll können Anteile zur Kompensation der Trägheiten bei dynamischem Betrieb enthalten.

Die Solldrehmomente MVMsoll und ME1soll werden von den zwei unterlagerten Drehzahlregelkreisen als Vorsteuerung benutzt und liegen im Sinne einer kaskadierten Stellgrößenbeschränkung innerhalb der Maximalmomentengrenzen des jeweiligen Aggregats, um Stellreserven für die Drehzahlregler 62, 64 zur Verfügung zu stellen. Der Drehzahlregler 62 vergleicht die Solldrehzahl nE1soll mit der Istdrehzahl nE1ist der ersten Elektromaschine 30, der Drehzahlregler 64 vergleicht die Solldrehzahl nVMsoll mit der Istdrehzahl nVMist des Verbrennungsmotors 10. Die Drehzahlregler 62, 64 berechnen zusätzliche Drehmomente auf der Basis der Regelabweichungen eVM bzw. eE1.

Bevorzugt ermittelt ein nicht bildlich dargestellter Mehrgrößenregler, dem die Solldrehzahl nVMsoll, nE1soll sowie die Istdrehzahlen nVMist, nE1 ist zugeführt werden,basierend auf diesen Drehmomente für die Aggregate.

Bei modernen Elektromaschinen 30, 36 wird ein vorgegebenes Solldrehmoment ausreichend genau umgesetzt. Beim Verbrennungsmotor 10 entstehen meist größere Abweichungen zwischen dem Solldrehmoment und dem an der Kurbelwelle 12 erzeugten Istdrehmoment. Daher ist es von Vorteil, den Regler 64 des Drehzahlregelkreises des Verbrennungsmotors 10 mit einem Integralanteil zu versehen, z.B. ein Integral-, Proportional-Integral- oder Proportional-Integral-Differential-Regler (I-, PI- oder PID-Regler), während der Drehzahlregler 62 der Elektromaschine vorzugsweise als Proportional-Regler oder Proportional-Differential-Regler (P- oder PD-Regler) ausgeführt ist.

Der Integralanteil gleicht Ungenauigkeiten in der Drehmomentansteuerung des Verbrennungsmotors 10 und Ungenauigkeiten in den Reibverhältnissen des Getriebes 18 aus. Im stationären Betrieb wird sich die Istdrehzahl nVMist des Verbrennungsmotors 10 der Solldrehzahl nVMsoll asymptotisch annähern. Damit geht auch die Regelabweichung eE1 an der ersten Elektromaschine 30 gegen Null. Die erste Elektromaschine 30 stellt dann näherungsweise das Solldrehmoment ein (ME1 ≈ ME1soll). Die zweite Elektromaschine 36 wird drehmomentgesteuert betrieben und stellt das Solldrehmoment näherungsweise ein, mit ME2 = ME2soll. Mit den von der Steuerung 48 vorgegebenen Solldrehmomenten wird auch die Vorgabe für die in das Bordnetz eingespeiste elektrische Leistung eingehalten, auch bei Ungenauigkeiten in den Reibverhältnissen des Getriebes 18.

Da die zwei Aggregate, Verbrennungsmotor 10 und erste Elektromaschine 30, drehzahlgeregelt betrieben werden, kann eines davon in die Stellgrößenbegrenzung geraten, ohne dass die Kontrolle über das System verloren geht. Gerät die Elektromaschine 30 infolge einer Über- oder Unterspannungsabregelung in die Stellgrößenbegrenzung, hält der Verbrennungsmotor 10 weiterhin die Drehzahlbindung aufrecht.

Die P-Anteile der beiden Drehzahlregler 62, 64 entsprechen in ihrer Wirkung drehzahlproportionalen mechanischen Dämpfern und wirken damit Drehschwingungen der Aggregate, wie sie z.B. infolge von Torsionsschwingungen des Zweimassenschwungrads 14 entstehen, entgegen. Mit den zwei unterlagerten Drehzahlregelkreisen tragen die beiden Aggregate Verbrennungsmotor 10 und Elektromaschine 30 zur aktiven Drehschwingungsdämpfung bei. In das Drehmoment des Verbrennungsmotors 10 lässt sich nur zu den diskreten Zündzeitpunkten eingreifen, was die Drehschwingungsdämpfung mittels Verbrennungsmotor 10 auf niedrige Frequenzen beschränkt. Bei einer als Drehstrommaschine ausgebildeter Elektromaschine 30 mit feldorientierter Regelung dagegen lassen sich Drehmomentanregelzeiten kleiner als 1 ms erzielen. In Verbindung mit einem geeigneten Drehzahlregler 62 ist damit die Dämpfung höherer Frequenzen möglich.

Die unterlagerten Drehzahlregelkreise sind im Ausführungsbeispiel der Fig. 2 dezentral in den Steuergeräten der einzelnen Aggregate (Motorsteuergerät 46 und erster Wechselrichter 42) realisiert. Die Drehzahlschleifen werden nicht über ein Bussystem geschlossen, entsprechende Signallaufzeiten sind somit nicht vorhanden. Es lassen sich hohe Bandbreiten erzielen. Für die Vorgabe der Solldrehmomente und der Solldrehzahlen von der Steuerung 48 an die den Aggregaten zugeordneten Steuergeräte 42, 44, 46 wird ein Bussystem 56 genutzt, das in modernen Kraftfahrzeugen üblicherweise vorhanden ist.

Daneben ist es von Vorteil, die Reglerparameter der unterlagerten Drehzahlregelkreise bzw. die Initialisierung des Integralanteils ebenfalls von der Steuerung 48 vorzugeben, wodurch sich das Regelverhalten und die aktive Drehschwingungsdämpfung an den Betriebszustand des Antriebsstrangs anpassen lassen, um z.B. Verbrennungsmotorstarts bzw. Verbrennungsmotorstopps, bei denen eine vom Zweimassenschwungrad 14 geprägte Resonanzfrequenz durchlaufen wird, getrennt zu betrachten und zu optimieren, ohne die Reglerstruktur zu ändern.

In den meisten Betriebszuständen des Antriebs arbeitet eine Elektromaschine 30 oder 36 als Motor, die andere, 36 oder 30, als Generator. Durch geeignete, an den Betriebszustand angepasste Vorgaben der Reglerparameter lassen sich die Auswirkungen von Reglereingriffen auf die in das Bordnetz eingespeiste elektrische Leistung minimieren.

Bei vorgegebener Fahrzeuggeschwindigkeit und damit festliegender Istdrehzahl nAWist an der Getriebeabtriebswelle 38 ist ein Drehzahlfreiheitsgrad im Getriebe 18 vorhanden. Besteht die Gefahr, das System mit zwei Drehzahlregelkreisen z.B. infolge von Ungenauigkeiten oder Zeitverzögerungen in den Drehzahlerfassungen zu verspannen, können an einem Drehzahlregelkreis Bandpassfilter vor oder hinter dem Drehzahlregler 62 vorgesehen werden, die den Reglereingriff auf den Frequenzbereich der unerwünschten Antriebsstrangdrehschwingungen begrenzen. Bei drohenden Stellgrößenbegrenzungen oder größeren Regelabweichungen sollte die Steuerung 48 die Wirkung der Bandpassfilter zurücknehmen, um beide Aggregate, Verbrennungsmotor 10 und Elektromaschine 30, für die Erhaltung der Drehzahlbindung zu nutzen.

## Patentansprüche

1. Verfahren zum Betreiben eines leistungsverzweigenden Hybridantriebs mit wenigstens einer ersten und einer zweiten, über ein Getriebe (18) gekoppelten Elektromaschine (30,36) sowie einem Verbrennungsmotor (10), der ein Drehmoment (MVM) ausgibt, wobei die Elektromaschinen (30,36) und der Verbrennungsmotor (10) antriebsverbunden zusammenwirken, wobei wenigstens zeitweise die erste Elektromaschine (30) drehzahlgeregelt und die zweite Elektromaschine (36) drehmomentgesteuert wird, wobei ein Drehzahlgeber (DG_E1) die aktuelle Drehzahl der ersten, drehzahlgeregelten Elektromaschine (30) und ein Drehzahlgeber (DG_AW) die aktuelle Drehzahl der zweiten, drehmomentgesteuer-ten Elektromaschine (36) erfasst, und wobei der Verbrennungsmotor (10) drehzahlgeregelt wird, **dadurch gekennzeichnet, dass** basierend auf einer Regelabweichung (eVM) zwischen einer Solldrehzahl (nVMsoll) und einer Istdrehzahl (nVMist) des Verbrennungsmotors (10) in das Drehmoment (MVM) des Verbrennungsmotors (10) eingegriffen wird, wobei das Solldrehmoment (MVMsoll) des Verbrennungsmotors (10) und das Solldrehmoment (ME1soll) der ersten Elektromaschine (30) mit einem Mehrgrößenregler ermittelt werden, dem die Solldrehzahlen (nVMsoll, nE1soll) und die Istdrehzahlen (nVMist, nE1ist) des Verbrennungsmotors (10) und der ersten Elektromaschine (30) zugeführt werden.

2. Verfahren nach Anspruch 1, **dadurch gekennzeichnet, dass** die Drehzahl (nE2ist) der zweiten Elektromaschine (36) direkt mit einer Fahrzeuggeschwindigkeit gekoppelt ist.

3. Verfahren nach einem der vorhergehenden Ansprüche, **dadurch gekennzeichnet, dass** die Drehzahl (nVMsoll) des Verbrennungsmotors (10) festgelegt und daraus eine Solldrehzahl (nE1soll) der ersten Elektromaschine (30) berechnet wird.

4. Verfahren nach einem der vorhergehenden Ansprüche, **dadurch gekennzeichnet, dass** Solldrehmomente (MVM, ME1soll, ME2soll) des Verbrennungsmotors (10) und der Elektromaschinen (30, 36) vorgegeben werden.

5. Verfahren nach Anspruch 4, **dadurch gekennzeichnet, dass** die Solldrehmomente (MVM, ME1soll) des Verbrennungsmotors (10) und der ersten Elektromaschine (30) zur Vorsteuerung der Drehzahlregelung des Verbrennungsmotors (10) und der ersten Elektromaschine (30) verwendet werden.

6. Verfahren nach einem der Ansprüche 1 bis 3, **dadurch gekennzeichnet, dass** aus den Solldrehzahlen (nVMsoll, nE1soll) sowie Istdrehzahlen (nVMist, nE1ist) des Verbrennungsmotors (10) und der ersten Elektromaschine (30) die Solldrehmomente (MVM, ME1soll) ermittelt werden.

7. Verfahren nach einem der Ansprüche 4 bis 6, **dadurch gekennzeichnet, dass** die Solldrehmomente (MVM, ME1soll) innerhalb von Maximalmomentengrenzen des Verbrennungsmotors (10) beziehungsweise der ersten Elektromaschine (30) liegen.

8. Verfahren nach einem der Ansprüche 3 bis 7, **dadurch gekennzeichnet, dass** jeder Drehzahlregler (42, 64) die jeweilige Solldrehzahl (nVMsoll, nE1soll) mit der jeweiligen Istdrehzahl (nVMist, nE1ist) vergleicht und daraus eine zusätzliches Drehmoment für den Verbrennungsmotor (10) beziehungsweise die erste Elektromaschine (30) auf Basis der jeweiligen Regelabweichung (eVM, eE1) berechnet.

9. Verfahren nach einem der vorhergehenden Ansprüche, **dadurch gekennzeichnet, dass** zur Drehzahlregelung des Verbrennungsmotors (10) ein Integralanteil eines Reglers (24) herangezogen wird.

10. Verfahren nach einem der vorhergehenden Ansprüche, **dadurch gekennzeichnet, dass** zur Drehzahlregelung der ersten Elektromaschine (30) ein Proportionalanteil eines Reglers (62) herangezogen wird.

11. Verfahren nach einem der vorhergehenden Ansprüche, **dadurch gekennzeichnet, dass** Proportionalanteile der Drehzahlregler (62, 64) zur Drehschwingungsdämpfung herangezogen werden.

12. Verfahren nach einem der vorhergehenden Ansprüche, **dadurch gekennzeichnet, dass** Reglerparameter und/oder eine Initialisierung eines Integralanteils von einer Steuerung (48) vorgegeben werden.

13. Verfahren nach einem der vorhergehenden Ansprüche, **dadurch gekennzeichnet, dass** ein Reglereinriff auf den Frequenzbereich unerwünschter Antriebsstrang Drehschwingungen durch einen Bandpassfilter begrenzt wird.

14. Verfahren nach einem der vorhergehenden Ansprüche, **dadurch gekennzeichnet, dass** Drehzahlregelkreise dezentral in Steuergeräten (46, 42) der einzelnen Aggregate realisiert werden.

## Claims

1. Method for operating a power-split hybrid drive having at least a first and a second electric machine (30, 36) coupled via a gearbox (18), and an internal combustion engine (10) which outputs a torque (MVM), wherein the electric machines (30, 36) and the internal combustion engine (10) interact in a derive-connected fashion, wherein the rotational speed of the first electric machine (30) is at least closed-loop controlled and the torque of the second electric machine (36) is open-loop controlled, wherein a rotational speed signal generator (DG_E1) senses the current rotational speed of the first electric machine (30) whose rotational speed is closed-loop controlled and a rotational speed signal generator (DG_AW) senses the current rotational speed of the second electric machine (36) whose torque is open-loop controlled, and wherein the rotational speed of the internal combustion engine (10) is closed-loop controlled, **characterized in that**, an intervention is made into the torque (MVM) of the internal combustion engine (10) on the basis of a control error (eVM) between a setpoint rotational speed (nVMsetp) and an actual rotational speed (nVMact) of the internal combustion engine (10), wherein the setpoint torque (MVMsetp) of the internal combustion engine (10) and the setpoint torque (ME1setp) of the first electric machine (30), are determined with a multi-variable controller to which the setpoint rotational speeds (nVMsetp, nE1setp) and the actual rotational speeds (nVMact, nE1act) of the internal combustion engine (10) and of the first electric machine (30) are fed.

2. Method according to Claim 1, **characterized in that** the rotational speed (nE2act) of the second electric machine (36) is coupled directly to a vehicle speed.

3. Method according to one of the preceding claims, **characterized in that** the rotational speed (nVMsetp) of the internal combustion engine (10) is defined, and a setpoint rotational speed (nE1setp) of the first electric machine (30) is calculated therefrom.

4. Method according to one of the preceding claims, **characterized in that** setpoint torques (MVM, ME1setp, ME2setp) of the internal combustion engine (10) and of the electric machines (30, 36) are predefined.

5. Method according to Claim 4, **characterized in that** the setpoint torques (MVM, ME1setp) of the internal combustion engine (10) and of the first electric machine (30) are used for performing pilot control of the rotational speed closed-loop control of the internal combustion engine (10) and of the first electric machine (30).

6. Method according to one of Claims 1 to 3, **characterized in that** the setpoint torques (MVM, ME1setp) are determined from the setpoint rotational speeds (nVMsetp, nE1setp) and from the actual rotational speeds (nVMact, nE1act) of the internal combustion engine (10) and of the first electric machine (30).

7. Method according to one of Claims 4 to 6, **characterized in that** the setpoint torques (MVM, ME1setp) are within maximum torque limits of the internal combustion engine (10) or of the first electric machine (30).

8. Method according to one of Claims 3 to 7, **characterized in that** each rotational speed closed-loop controller (42, 64) compares the respective setpoint rotational speed (nVMsetp, nE1setp) with the respective actual rotational speed (nVMact, nE1act) and calculates therefrom an additional torque for the internal combustion engine (10) or the first electric machine (30) on the basis of the respective control error (eVM, eE1).

9. Method according to one of the preceding claims, **characterized in that** an integral component of a closed-loop controller (24) is used to perform rotational speed closed-loop control of the internal combustion engine (10).

10. Method according to one of the preceding claims, **characterized in that** a proportional component of a closed-loop controller (62) is used to perform rotational speed closed-loop control of the first electric machine (30).

11. Method according to one of the preceding claims, **characterized in that** proportional components of the rotational speed closed-loop controllers (62, 64) are used to damp the rotational oscillation.

12. Method according to one of the preceding claims, **characterized in that** closed-loop parameters and/or initialization of an integral component are predefined by an open-loop controller (48).

13. Method according to one of the preceding claims, **characterized in that** a closed-loop controller intervention into the frequency range of undesired drive-train rotational oscillations is limited by a bandpass filter.

14. Method according to one of the preceding claims, **characterized in that** rotational speed closed-loop control circuits are implemented in a decentralized fashion in control devices (46, 42) of the individual assemblies.

## Revendications

1. Procédé de conduite d'un entraînement hybride à deux ramifications de puissance, qui présente au moins une première et une deuxième machine électrique (30, 36) accouplées par l'intermédiaire d'une transmission (18) ainsi qu'un moteur à combustion interne (10) qui délivre un couple de rotation (MVM),
les machines électriques (30, 36) et le moteur à combustion interne (10) coopérant à l'entraînement,
la vitesse de rotation de la première machine électrique (30) étant régulée au moins une partie du temps et le couple de rotation de la deuxième machine électrique (36) étant asservi,
une sonde (DG_E1) de vitesse de rotation saisissant la vitesse de rotation effective de la première machine électrique (30) à vitesse de rotation régulée et une sonde (DG_AW) de vitesse de rotation saisissant la vitesse de rotation effective de la deuxième machine électrique (36) à couple de rotation asservi,
la vitesse de rotation du moteur à combustion interne (10) étant régulée,
**caractérisé en ce que**
une intervention s'effectue sur le couple de rotation (MVM) du moteur à combustion interne (10) sur la base d'un écart de réglage (eVM) entre une vitesse de rotation de consigne (nVMsoll) et la vitesse de rotation effective (nVMist) du moteur à combustion interne (10),
**en ce que** le couple de rotation de consigne (MVsoll) du moteur à combustion interne (10) et le couple de rotation de consigne (ME1soll) de la première machine électrique (30) sont déterminés à l'aide d'un régulateur à plusieurs grandeurs auquel sont apportées les vitesses de rotation de consigne (nVMsoll, nE1soll) et les vitesses de rotation effectives (nVMist, nE1ist) du moteur à combustion interne (10) et de la première machine électrique (30).

2. Procédé selon la revendication 1, **caractérisé en ce que** la vitesse de rotation (nE2ist) de la deuxième machine électrique (36) est couplée directement à la vitesse du véhicule.

3. Procédé selon l'une des revendications précédentes, **caractérisé en ce que** la vitesse de rotation (nVMsoll) du moteur à combustion interne (10) est fixée, la vitesse de rotation de consigne (nE1soll) de la première machine électrique (30) étant calculée à partir d'elle.

4. Procédé selon l'une des revendications précédentes, **caractérisé en ce que** les couples de rotation de consigne (MVM, ME1soll, ME2soll) du moteur à combustion interne (10) et des machines électriques (30, 36) sont prédéterminés.

5. Procédé selon la revendication 4, **caractérisé en ce que** les couples de rotation de consigne (MVM, ME1soll) du moteur à combustion interne (10) de la première machine électrique (30) sont utilisés pour la pré-commande de la régulation de la vitesse de rotation du moteur à combustion interne (10) et de la première machine électrique (30).

6. Procédé selon l'une des revendications 1 à 3, **caractérisé en ce que** les couples de rotation de consigne (MVM, ME1soll) sont déterminés à partir des vitesses de rotation de consigne (nVMsoll, nE1soll) et des vitesses de rotation effective (nVMist, nE1ist) du moteur à combustion interne (10) et de la première machine électrique (30).

7. Procédé selon l'une des revendications 4 à 6, **caractérisé en ce que** les couples de rotation de consigne (MVM, ME1soll) sont situés à l'intérieur de limites de couple maximal du moteur à combustion interne (10) et de la première machine électrique (30).

8. Procédé selon l'une des revendications 3 à 7, **caractérisé en ce que** chaque régulateur (42, 64) de vitesse de rotation compare la vitesse de rotation de consigne (nVMsoll, nE1soll) à chaque vitesse de rotation effective (nVMist, nE1ist) et calcule à partir de là le couple de rotation supplémentaire du moteur à combustion interne (10) ou de la première machine électrique (30) sur la base de chaque écart de réglage (eVM, eE1).

9. Procédé selon l'une des revendications précédentes, **caractérisé en ce que** la partie intégrale d'un régulateur (24) intervient pour a régulation de la vitesse de consigne du moteur à combustion interne (10).

10. Procédé selon l'une des revendications précédentes, **caractérisé en ce que** la partie proportionnelle d'un régulateur (62) intervient pour la régulation de la vitesse de rotation de la première machine électrique (30).

11. Procédé selon l'une des revendications précédentes, **caractérisé en ce que** les parties proportionnelles des régulateurs (62, 64) de vitesse de rotation interviennent dans l'amortissement des oscillations de rotation.

12. Procédé selon l'une des revendications précédentes, **caractérisé en ce que** les paramètres des régulateurs et/ou l'initialisation de la partie intégrale sont prédéterminés par une commande (48).

13. Procédé selon l'une des revendications précédentes, **caractérisé en ce que** les interventions des régulateurs sur la plage de fréquence d'oscillation de rotation indésirable du train d'entraînement sont limitées par un filtre passe-bande.

14. Procédé selon l'une des revendications précédentes, **caractérisé en ce que** les boucles de régulation de vitesse de rotation sont réalisées de manière décentralisée dans des appareils de commande (46, 42) des différents moteurs.
